# EUROPEAN PATENT APPLICATION

(11) **EP 2 048 032 A1**
(43) Date of publication of application: **15.04.2009**
(21) Application number: 08166347.8
(22) Date of filing: 10.10.2008
(51) Int. Cl.: B60R 7/06

(54) **Object-holder assembly for a vehicle**

(30) Priority: 12.10.2007 IT TO20070720
(71) Applicant: C.R.F. Società Consortile per Azioni, 10043 Orbassano (Torino) (IT)
(72) Inventor: Boreanaz, Giovanni, 10043, Orbassano (IT); Fino, Federica, 10043, Orbassano (IT); Storgato, Angelo, 10043, ORBASSANO (IT)
(74) Representative: Jorio, Paolo

(57) **Abstract**

Object-holder assembly (10) for a vehicle, in which a supporting and fixing structure (5) arranged between a front portion (4) of a movable tunnel (3) and a dashboard (2) of a vehicle carries an object-holder (12) slidable in opposite directions orthogonal to a longitudinal vertical plane of the vehicle between two extreme lateral open positions, in which the object-holder (12) extends into the passenger compartment in a cantilevered fashion from the structure (5), and through an intermediate closed position, in which the object-holder (12) is completely housed in said structure (5).

## Description

The present invention relates to an object-holder assembly for a vehicle, in particular for a motor vehicle.

Inside the passenger compartment of a vehicle and, in particular, in a position adjacent to the dashboard of said vehicle there is the need for object-holders that are conveniently and immediately accessible for both the driver and the passenger and are suitable to hold the objects placed in them in a stable manner.

The purpose of the present invention is to provide an object-holder assembly, which satisfies the above requirements in a simple and cost-effective manner.

According to the present invention there is provided an object-holder assembly for a vehicle comprising a supporting and fixing structure suitable to be arranged between a front portion of a movable tunnel and a dashboard of a vehicle, at least one object-holder being coupled to the supporting structure; guiding means to guide the object-holder in opposite directions along a rectilinear sliding direction orthogonal to a vertical longitudinal plane of the vehicle between two extreme positions in which the object-holder is open and through an intermediate position in which said object-holder is closed.

Preferably in the assembly described above, when the object-holder is arranged in said intermediate position it is completely housed in said structure.

Conveniently, the assembly comprises stop means to stop said object-holder in said open positions; said stop means comprising stop elements arranged on front end walls of said object-holder transversely with respect to said sliding direction and closing against end-of-travel elements arranged on lateral end portions of said structure to consent the almost complete extraction of the object-holder from said supporting and fixing structure.

The present invention will now be described with reference to the attached drawings, illustrating a nonlimiting embodiment thereof, in which:
- figure 1 is a perspective view of a passenger compartment of a vehicle housing an object-holder assembly according to the present invention;
- figures 2 and 3 are perspective views of the assembly of figure 1 arranged in different functional positions; and
- figure 4 is an alternative embodiment of a detail of figure 3.

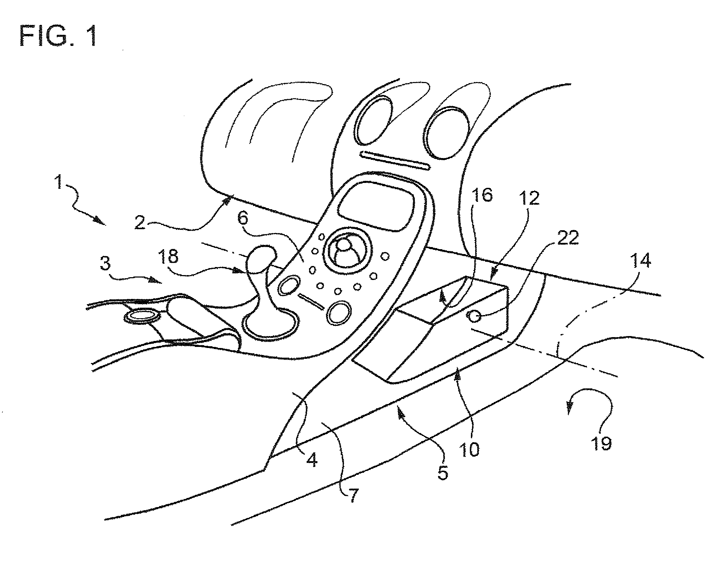

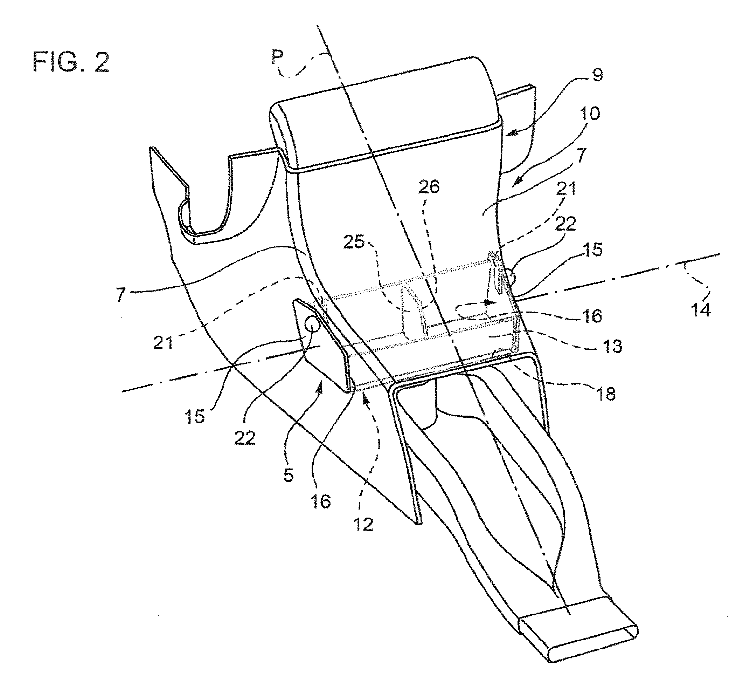

In figure 1 designated as a whole by number 1 is a passenger compartment of a vehicle. The passenger compartment 1 houses a dashboard 2 which is partially illustrated and a movable tunnel 3, a front portion 4 of which close to and beneath the dashboard 2 is connected to said dashboard 2 by means of a supporting and fixing structure 5. The structure 5 which, in the particular example described herein is covered frontally by an instrument panel 6, is delimited laterally by two substantially flat walls 7 arranged on opposite sides of a vertical longitudinal plane of the vehicle, the direction of which is indicated by P in figure 2.

In the particular example described herein, the structure 5 houses part of a device 9 that conveys and distributes a flow of air to provide air-conditioning to the passenger compartment, which is of a known type and is not described in detail, and an object-holder assembly, indicated by number 10. Alternatively, according to a variant that is not illustrated, the structure 5 constitutes part of the object-holder assembly 10 and merely serves as a connection and/or frame.

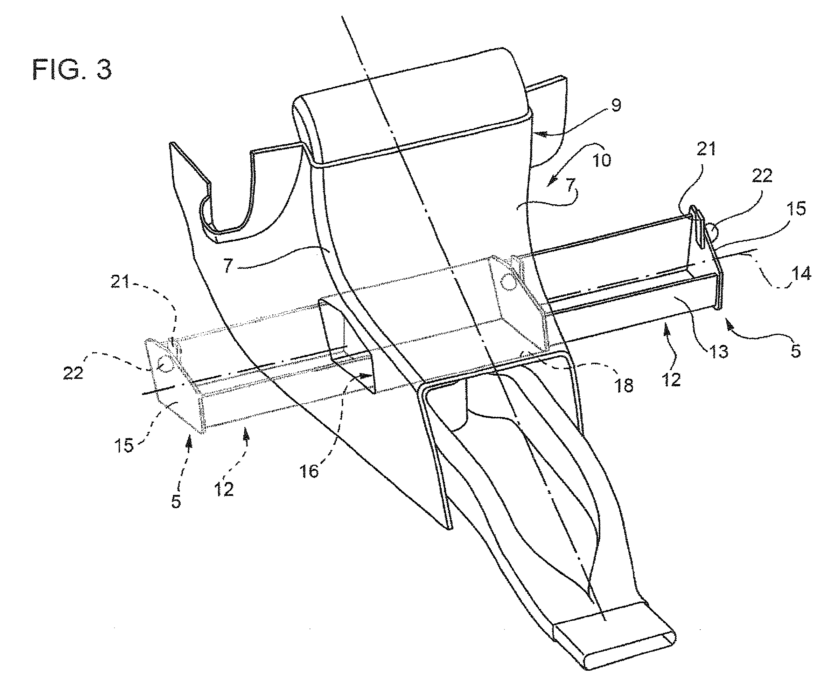

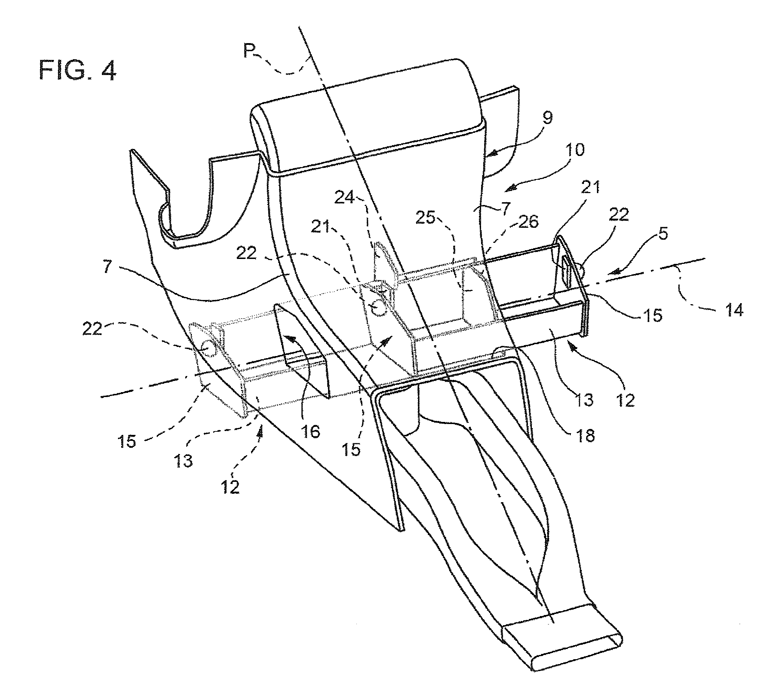

In addition to the structure 5, the object-holder assembly 10 comprises an object-holder 12 open towards the top and comprising an intermediate concave portion 13 elongated in a rectilinear direction 14 orthogonal to said longitudinal plane P of the vehicle and two front end walls 15 connected in a known manner to the intermediate portion 13. The structure 5 comprises an intermediate guiding portion 18, which is schematically illustrated, arranged approximately half way up between the floor of the vehicle and the lower part of the dashboard 2, and to which the object-holder 12 is slidingly coupled so as to translate or slide parallel to said rectilinear direction 14 in opposite directions between two opposite extreme positions in which the object-holder is open, illustrated in figures 3 and 4, and through an intermediate position in which said object-holder 12 is closed, illustrated in figure 2.

When arranged in the open positions, the object-holder 12 projects in a cantilevered fashion from the relative side wall 7 through a relative opening 16 obtained in said side wall 7 into a driver's zone 18 or a passenger's zone 19 so as to allow the driver or passenger to have access to the stowage compartment in the object-holder 12 (figure 1). When arranged in the intermediate closed position, the object-holder 12 is completely housed in the structure 5 in a position that is substantially invisible from the outside and with each of its front walls 7 closing a relative opening 16.

The object-holder 12 is stopped in the open positions and held in the closed position by a retaining device comprising for each front wall 7 a stop appendix 21 (figures 2-5) inside the object-holder 12 and closing against an inside surface of the relative wall 7. The stop appendix 21 can be moved manually by moving a relative button or knob 22 between a retaining position, in which it closes against the inside surface of the relative wall 7, and a release position, in which it allows the object-holder to be extracted from the structure 5. Each of the appendices 21 also constitutes an end-of-travel element that closes against a corresponding inside surface of the relative wall 7 to consent the substantially complete extraction of the object-holder 12 from the structure 5 as illustrated in figure 3.

Alternatively, as illustrated in figure 4, the appendices 21 close against a projection 24 of the intermediate structure 5 between the walls 7 to consent the partial extraction of the object-holder 12.

According to that illustrated in figure 2, the space inside the object-holder 12 is divided into two stowage compartments arranged side by side by means of an intermediate separator 25; the separator 25 comprises an appendix 26, which is arranged, in use, against one or the other of the walls 7 to consent the partial extraction of the object-holder 12. In the embodiment described herein the separator 25 is fixed. Alternatively, according to an alternative embodiment, the separator 25 is adjustably joined to the object-holder so that the space inside the object-holder can be adapted according to the objects or items to be placed inside it. From the above description it is clear that with the object-holder assembly 10 objects can be held in the object-holder 12 when the object-holder 12 is arranged in its intermediate position since it is permanently open towards the top, and also that both the driver of the vehicle and the passenger can conveniently and immediately access the object-holder in that it can be moved into either of the compartments housing the lower limbs of the driver or passenger.

From the above it is apparent that modifications and variations may be made to the assembly 10 described herein without departing from the scope of the claims. In particular, the geometry of the object-holder 12 could differ from that illustrated by way of example, and the structure 5 could comprise walls shaped differently to those illustrated by way of example. Moreover, the devices for stopping the object-holder 12 in its extreme end-of-travel positions and for holding it in its intermediate closed position could also be different.

## Claims

1. Object-holder assembly for a vehicle comprising a supporting and fixing structure suitable to be arranged between a front portion of a movable tunnel and a dashboard of a vehicle, at least one object-holder being coupled to the supporting structure; guiding means to guide the object-holder in opposite directions along a rectilinear sliding direction orthogonal to a vertical longitudinal plane of the vehicle between two extreme positions in which the object-holder is open and through an intermediate position in which said object-holder is closed.

2. Object-holder assembly according to claim 1, **characterized in that** when arranged in said intermediate position the object-holder is completely housed in said structure.

3. Assembly according to claim 1 or 2,
**characterized in that** it comprises stop means to stop said object-holder in said open positions; said stop means comprising stop elements arranged on front end walls of said object-holder transversely with respect to said sliding direction and closing against end-of-travel elements arranged on lateral end portions of said structure to consent the almost complete extraction of the object-holder from said supporting and fixing structure.

4. Object-holder assembly according to claim 1 or 2, **characterized in that** it comprises stop means to stop said object-holder in said open positions; said stop means comprising stop elements associated with an intermediate portion of said object-holder and closing against end-of-travel elements arranged on said structure to enable the partial extraction of the object-holder.

5. Assembly according to claim 4, **characterized in that** said intermediate portion of said object-holder comprises a separator dividing the space inside said object-holder into two receptacles arranged side by side.

6. Object-holder assembly according to claim 1 or 2, **characterized in that** it comprises stop means to stop said object-holder in said open positions; said stop means comprising stop elements arranged on front end walls of said object-holder transversely with respect to said direction of sliding and closing against end-of-travel elements integrally connected to the structure to enable the partial extraction of the object-holder.

7. Assembly according to any one of the previous claims, **characterized in that** it comprises retaining means to releasably hold said object-holder in said closed position, and operating means to move said retaining means between a retaining position and a release position.
